# EUROPÄISCHE PATENTANMELDUNG

(11) **EP 2 521 070 A2**
(43) Veröffentlichungstag der Anmeldung: **07.11.2012**
(21) Anmeldenummer: 12166638.2
(22) Anmeldetag: 03.05.2012
(51) Int. Cl.: G06K 9/00, G06T 7/20

(54) **Verfahren und System zum Erfassen einer statischen oder dynamischen Szene, zum Bestimmen von Rohereignissen und zum Erkennen von freien Flächen in einem Beobachtungsgebiet**

(30) Priorität: 06.05.2011 DE 102011075412
(71) Anmelder: Deutsche Telekom AG, 53113 Bonn (DE)
(72) Erfinder: Hofmann, Jörg, 81927 München (DE); Böhnke, Uwe, 80796 München (DE)
(74) Vertreter: Vossius & Partner

(57) **Zusammenfassung**

Die Erfindung betrifft ein Verfahren zum Erfassen einer statischen oder dynamischen Szene in einem Beobachtungsgebiet, insbesondere von Parkplätzen oder Strassen mittels Auswerten von aufeinanderfolgenden Videobildern, die mit mindestens einer Kamera aufgenommen werden, wobei anhand von Differenzbildern zweier Videobilder eine statische Szene angenommen wird, wenn in einer Vielzahl von Differenzbildern keine signifikante Änderung auftritt. Zudem werden Roh-Ereignisse in dem Beobachtungsgebiet mittels Auswerten von aufeinanderfolgenden Videobildern, die mit mindestens einer Kamera aufgenommen werden, bestimmt, wobei in einem Differenzbild von zwei statischen Szenen nach Helligkeit und/oder Farbe zusammenhängende Gebiete ermittelt und diese als Roh-Ereignisse aufgefasst werden. Die Erfindung betrifft im Weiteren ein Verfahren zum Erkennen von freien Flächen in einem Beobachtungsgebiet, insbesondere von Parkplätzen und Strassen mittels Auswerten von aufeinanderfolgenden Videobildern, wobei die Roh-Ereignisse im Kontext der quasistatischen Geometrie der Fahrbahn und Parkbereiche mittels eines regelbasierten Entscheidungsverfahrens anaylisiert und als freie Fläche in einem Beobachtungsgebiet erkannt werden.

## Beschreibung

### Technisches Gebiet

Die Erfindung bezieht sich auf ein Verfahren und System zum Erfassen einer statischen oder dynamischen Szene in einem Beobachtungsgebiet, außerdem auf ein Verfahren und System zum Bestimmen von Roh-Ereignissen in einem Beobachtungsgebiet, insbesondere von Parkplätzen oder Strassen mittels Auswerten von aufeinanderfolgenden Videobildern und weiterhin auf ein Verfahren und System zum Erkennen von freien Flächen in einem Beobachtungsgebiet, insbesondere von Parkplätzen oder Strassen mittels Auswerten von aufeinanderfolgenden Videobildern.

### Stand der Technik

DE 10 2008 029 413 A1 betrifft ein Verfahren zur Überwachung und Verwaltung von Parkbuchten, bei welchem die Belegung von mehreren Parkbuchten erfasst wird. Die Parkbuchten werden mit einer Videooptik erfasst und die Videobilddaten ortsaufgelöst einer Bildanalyse unterzogen, wobei die Daten der Bildanalyse von Flächenbereichen, die je einer Parkbucht zugeordnet sind, mit gespeicherten Videobilddaten verglichen werden, die einer Bildanalyse derselben Flächenbereiche der unbelegten Parkbucht entsprechen, wobei das Vergleichsergebnis als Kriterium für die aktuelle Parkbuchtbelegung verwendet wird. Der Vergleich erfolgt anhand gespeicherter Videobilddaten.

DE 10 2009 038 364 betrifft ein Verfahren zur automatischen Objekterkennung und anschließenden Objektverfolgung in digitalen Videosystemen mit mindestens einer Kamera zur Aufzeichnung von Videosequenzen und Übertragung sowie weiteren Verarbeitung oder Auswertung der Videodaten, wobei ein auf einem Gaussian Mixture Modell GMM basierender Objekterkennungsalgorithmus und eine weitere, auf Mean-Shift basierende Objekterkennung miteinander kombiniert werden.

### Offenbarung der Erfindung

Es ist daher Aufgabe der Erfindung ein Verfahren und System zum Erfassen einer statischen oder dynamischen Szene in einem Beobachtungsgebiet, insbesondere von Parkplatzen oder Strassen, außerdem ein Verfahren und System zum Bestimmen von Roh-Ereignissen in einem Beobachtungsgebiet, insbesondere von Parkplätzen oder Strassen mittels Auswerten von aufeinanderfolgenden Videobildern und weiterhin ein Verfahren und System zum Erkennen von freien Flächen in einem Beobachtungsgebiet, insbesondere von Parkplätzen oder Strassen mittels Auswerten von aufeinanderfolgenden Videobildern, bereitzustellen, das zuverlässig ist und sicher arbeitet.

Diese Aufgabe wird durch ein Verfahren und System gemäß den unabhängigen Ansprüchen 1, 2, 4 und 12 gelöst. Die abhängigen Ansprüche 3, 5 bis 11 sowie 13 und 14 betreffen besondere Ausführungsformen.

Ein Aspekt der Erfindung betrifft das Erfassen einer statischen oder dynamischen Szene im Beobachtungsgebiet anhand von Videobildern, die mit mindestens einer Kamera aufgenommen werden. Hierzu werden zwei direkt aufeinanderfolgende Videobilder V1 und V2 als Bildpaar aufgefasst und ein Differenzbild (D1) des Bildpaars durch Bilden einer Differenz von V2 und V1 berechnet. In dem Differenzbild wird der Nutzsignalanteil sowie der Rauschanteil bestimmt. Im Weiteren wird festgestellt, ob eine signifikante Änderung zwischen den zwei Videobildern (V1,V2) des Bildpaares vorliegt. Dabei wird vorzugsweise der Rauschanteil mit einem Schwellwert verglichen. Dieser Vorgang wird fortlaufend für eine Anzahl n von Bildpaaren, wobei n = (25, 26, ..., N) ist, und/oder für einen vorgegebenen Zeitraum von vorzugsweise m Sekunden, wobei m = (1, 2, ..., M) ist, wiederholt. Die Gesamtzahl N ist vorzugsweise eine Zahl aus dem Bereich 25 bis 125, besonders bevorzugt 50 bis 75. Die Gesamtzahl M ist vorzugsweise eine Zahl aus dem Bereich 1 bis 5, besonders bevorzugt 2 bis 3. Tritt bei allen auf diese Weise analysierten Bildpaaren keine signifikante Änderung auf, so gilt eine statische Szene als festgestellt. Ist dies der Fall, so wird mindestens ein Bild der statischen Szene, vorzugsweise das Bild des zuletzt analysierten Bildpaares, als Referenzbild gespeichert. Tritt hingegen bei allen auf diese Weise analysierten Bildpaaren eine signifikante Änderung auf, so gilt eine dynamische Szene als festgestellt.

Besonders bevorzugt werden gemäß einem Aspekt der Erfindung sowohl der Rauschanteil, als auch der Schwellwert dynamisch bestimmt aus dem Histogramm des Differenzbildes D1. Gemäß diesem Aspekt der Erfindung wird nicht mit festen Parametern gearbeitet, sondern das Verfahren ist adaptiv, und dadurch zuverlässiger.

Ein weiterer Aspekt der Erfindung betrifft die Bestimmung von Rohereignissen in Form von zusammenhängenden Bildpunktgruppen, die sich aus der Differenz zweier statischer Szenen, die vorzugsweise mit dem obigen Verfahren gewonnen werden, bestimmen lassen. Hierzu werden zunächst zwei unterschiedliche statische Szenen erfasst. Es wird ein zweites Differenzbild (D2) aus dem Referenzbild der erstens statischen Szene und dem Referenzbild der nächsten statischen Szene berechnet, wobei vorzugsweise jeweils gleiche statische Bereiche in den Referenzbildern verglichen werden. Bildpunktgruppen, deren Bildpunkte nach Helligkeit und/oder der Farbe zusammenhängen werden in dem zweiten Differenzbild (D2) mittels eines Segmentierungsalgorithmus ermittelt und diese in der weiteren Verarbeitung als Roh-Ereignisse aufgefasst.

Die Videobilder, und auch das Differenzbild, werden für die folgende Weiterverarbeitung vorzugsweise nicht übergeben. Die im Folgenden beschriebene Erkennung der Bedeutung der Roh-Ereignisse kann ausschließlich auf der Analyse der Roh-Ereignisse und deren zeitlichen Verlauf durchgeführt werden.

Ein weiterer Aspekt der Erfindung betrifft ein Verfahren zum Erkennen von freien Flächen in einem Beobachtungsgebiet, insbesondere von Parkplätzen oder Strassen mittels Auswerten von aufeinanderfolgenden Videobildern. Hierbei werden die Roh-Ereignisse im Kontext der Geometrie des Beobachtungsgebietes, insbesondere der Geometrie oder quasi-statischen Geometrie der Fahrbahn und Parkbereiche mittels eines regelbasierten Entscheidungsverfahrens analysiert und im Ergebnis freie Flächen im Beobachtungsgebiet identifiziert.

Ein weiterer Aspekt betrifft ein System zum Durchführen eines Verfahrens zum Erfassen einer statischen Szene sowie eines Roh-Ereignisses, wobei in dem System erfindungsgemäß mindestens eine Kamera, wie eine Video- bzw. Infrarotkamera zum Aufnehmen von aufeinanderfolgenden Videobildern; eine Recheneinrichtung zum Verarbeiten der Videobilder, eine Speichereinrichtung zum Speichern von Information sowie einer Einrichtung zum Weitergeben der ermittelten Information umfasst. Dabei kann die Information eine oder mehrere der folgenden Einzelinformationen aufweisen: die Geometrie des Beobachtungsgebietes, zeitliche und/oder räumliche Muster, Ergebnisse des Verfahrens wie Differenzbilder, Roh-Ereignisse, Helligkeit und/oder Farbe des Untergrunds in dem Beobachtungsgebiet, die Historie von klassifizierten Roh-Ereignissen und Belegungsinformationen der Flächen im Beobachtungsgebiet.

Ein Aspekt der Erfindung liegt in einem Verfahren zum Erkennen eines Belegungszustandes eines Beobachtungsgebietes wie Parkplätze oder Strassen durch statistische Auswertung von Bildinformation in Form von Roh-Ereignissen, die sich als Bildpunktgruppe bei der Auswertung von Differenzen statischer Szenen des Beobachtungsgebietes ergeben. Mit der statistischen Auswertung werden relative Häufigkeiten von Farbwechseln innerhalb der Bildpunktgruppen erkannt und die Farbe mit maximaler Häufigkeit als Fahrbahnbelag klassifiziert. Ist diese Klassifikation erfolgt, so kann feststellt werden, ob ein Bereich der Fahrbahn verdeckt, mithin durch bspw. Fahrzeuge belegt ist.

Die Erfindung hat den Vorteil, dass anhand der Auswertung des Wechsels von einer statischen Szene zur folgenden statischen Szene mittels eines statistischen Klassifikationsverfahrens die momentane Bodenreflexion des Fahrbahnbelages bestimmt werden kann. Anhand der momentanen Bodenreflexion kann weiterhin erkannt werden, ob es sich bei einem bestimmten Teil einer Szene um eine verdeckte oder unverdeckte Fläche einer Fahrbahn handelt, mithin ob die Fahrbahn durch insbesondere ein Fahrzeug verdeckt ist.

Die Erfindung ermöglicht, dass zum Vergleich aktuelle Bilddaten herangezogen werden können. Basierend auf dem eigentlichen Detektionsverfahren zur Erkennung stehender Fahrzeuge betrifft ein weiterer Aspekt der Erfindung, die Übermittlung und Weiterverarbeitung der Daten in einem geeigneten System. Ziel dieses Systems ist, einerseits parkende Fahrzeuge auf dafür vorgesehen Flächen kenntlich zu machen, andererseits stehenden Verkehr und Pannenfahrzeuge an neuralgischen Punkten wie in Tunnels oder auf Straßenkreuzungen zeitnah zu erkennen. Außerdem wird ein Verfahren bereitgestellt, das unabhängig von der geometrischen Form der Parkbuchten in Form von a priori Information arbeiten kann.

Das erfindungsgemäße Verfahren kann mit beliebigen, nicht vorab definierten Parkflächen arbeiten. Vorzugsweise wird lediglich eine Unterteilung in Fahrbahn oder überhaupt mögliche

Parkfläche zur Unterstützung der Entscheidung berücksichtigt. Aber auch das ist nicht zwingend erforderlich. Das vorliegende Verfahren arbeitet vom Prinzip her völlig autonom. Das erfindungsgemäße Verfahren erkennt den Belegungszustand autonom, mit Hilfe einer gewissen 'Lernfähigkeit'. Dadurch wird die Wirtschaftlichkeit (Personalkosten) verbessert, insbesondere bei einer sehr großen Anzahl von Parkplätzen.

Gemäß der vorliegenden Erfindung werden für das Verfahren weder Objekterkennung, noch Objektverfolgung benötigt. Stattdessen erfolgt eine Analyse von Farb- und Helligkeitsänderungen, wobei insbesondere das Wissen über die spezielle Situation 'Parken' bei der Entscheidungsfindung berücksichtigt wird.

### Kurzbeschreibung der Figuren

Das Verfahren und das zugeordnete System der Erfindung werden detaillierter im Folgenden anhand von Ausführungsbeispielen und den Zeichnungen beschrieben.

Es zeigen
Figur 1 die Änderung der Farbe der beobachteten Fläche des Fahrbahnbelages zu einer beliebigen Fahrzeugfarbe als Funktion der Zeit;
Figur 2 die Systemarchitektur "Smart Camera", in der Bilddatenauswertung in einem geeigneten Prozessor der Kamera erfolgt; und
Figur 3 die Systemarchitektur "Cloud", in der die Bilddatenauswertung in einer dezidierten Plattform erfolgt.

### Detaillierte Beschreibung der Ausführungsformen

Das Verfahren zur Erkennung freier Parkflächen und von stehenden Fahrzeugen in beliebigen Umgebungen kann eine primäre Analyse der Videobilder aufweisen, die im Ergebnis Roh-Ergebnis Roh-Ereignisse liefert, sowie eine sekundäre Analyse aufweisen, mit der die Bedeutung der Roh-Ereignisse erkannt wird und die im Ergebnis freie Parkflächen und stehende Fahrzeuge liefert. Das Verfahren beruht auf dem Erkennen, Analysieren und Interpretieren des Wechsels von Farben und Helligkeit von Pixelgruppen. Dabei wird der Untergrund (Boden, Fahrbahnbelag) durch statistische Analyse automatisch erkannt. Bei der primären Analyse wird der eingehende Strom der Videobilder Bild für Bild analysiert. Es werden Beziehungen zwischen direkt aufeinanderfolgenden, und zwischen zeitlich beliebig weit auseinander liegenden Bildern untersucht.

Zur Bestimmung der Roh-Ereignisse werden statische Szenen verwendet. Diese lassen sich in einer Ausführungsform mit einem Standardverfahren der Bildverarbeitung bestimmen. In einer weiteren Ausführungsform werden diese folgendermaßen bestimmt:
Zwischen jeweils zwei direkt aufeinanderfolgenden Videobildern (V1, V2) wird pixelweise die Differenz gebildet und so ein Differenzbild D erzeugt. Für dieses Differenzbild wird das Rauschen und das Nutzsignal bestimmt. Darauf basierend wird erkannt, ob zwischen den Bildern V1 und V2 bereichsweise eine signifikante Änderung besteht. Wenn über eine gewisse Zeit bspw. einige Sekunden keine signifikanten Änderungen zwischen korrespondierenden Bereichen der Bildpaare V1 und V2 auftreten, dann ist eine statische Szene in der eingehenden Bildfolge erkannt worden. Das Bild V2 wird als Referenzbild gespeichert, weil es das Abbild der statischen Szene ist.

Die Bestimmung der Roh-Ereignisse kann wie folgt erfolgen:
Wenn in den eingehenden Videobildern die nächste statische Szene V2b erkannt worden ist, dann wird ein Differenzbild D2 zwischen V2 und V2b erzeugt, wiederum pixelweise. V2b wird als neues Referenzbild gespeichert. Die Roh-Ereignisse ergeben sich dann in Form von nach Helligkeit und/oder Farbe zusammenhängender Bildpunktgruppen, die in dem Differenzbild D2 zweier statischer Szenen mittels eines Segmentierungsalgorithmus identifiziert werden.

In einer bevorzugten Ausführungsform wird die Geometrie jeder Bildpunktgruppe als Roh-Ereignis bestimmt. Das Rohereignis enthält mindestens eine der folgenden Informationen:
den Wechsel der Farbe, insbesondere den Wechsel der Helligkeit und/oder Farbe einer Bildpunktgruppe jeweils zu Zeit T sowie die vorhergehenden Farbwerte der Bildpunktgruppe; die Zeit T und/oder das Datum der Aufnahme des neuen Referenzbildes; die geometrischen Koordinaten des Gebietes, in dem der Wechsel der Helligkeit und/oder Farbe erfolgte; die Koordinaten des Schwerpunktes der festgelegten zusammenhängenden Bildgruppe sowie die Anzahl von Bildpunkten in der Bildpunktgruppe.

Anhand der identifizierten Roh-Ereignisse lassen sich freie Flächen in einem Beobachtungsgebiet erkennen, indem diese mittels eines regelbasierten Entscheidungsverfahrens im Kontext der quasi-statischen Geometrie des Beobachtungsgebietes, insbesondere der quasi-statischen Geometrie der Fahrbahn analysiert werden. Vorteil der Berücksichtigung der quasi-statischen Geometrie des Beobachtungsgebietes ist, dass Flächen, für deren Belegungsgrad man sich nicht interessiert wie Bereiche auf Parkplätzen, die der Zufahrt zu den einzelnen Parkbuchten dienen, aus der Freiflächendetektion herausgenommen werden können. Derartige priori Information erhöht die Zuverlässigkeit des Systems.

In einer bevorzugten Ausführungsform werden zunächst sich überschneidende Bildbereiche für Roh-Ereignisse zusammengelegt, die zur gleichen Zeit T stattfinden. Dabei wird die Größe von Gebieten oder zusammengelegten Gebieten der Roh-Ereignisse mit einer Mindestgröße von Bildbereichen, die Abbildungen von Objekten, vorzugsweise Fahrzeugen entsprechen, verglichen.

Die geometrische Beziehung zwischen der realen beobachteten Szene und der Bildebene kann bekannt sein. Mit Hilfe einer entsprechenden Transformation wird die Mindestgröße von Fahrzeugen in der Bildebene bestimmt. Roh-Ereignisse, deren Gebiete oder zusammengelegte Gebiete kleiner, vorzugsweise signifikant kleiner als die Mindestgröße sind, werden herausgefiltert. Vorteil dieser bevorzugten Ausführungsform ist eine geringere Fehlerrate, indem Objekte, die nicht Fahrzeuge sind, wie Fußgänger oder Tiere, herausgefiltert werden.

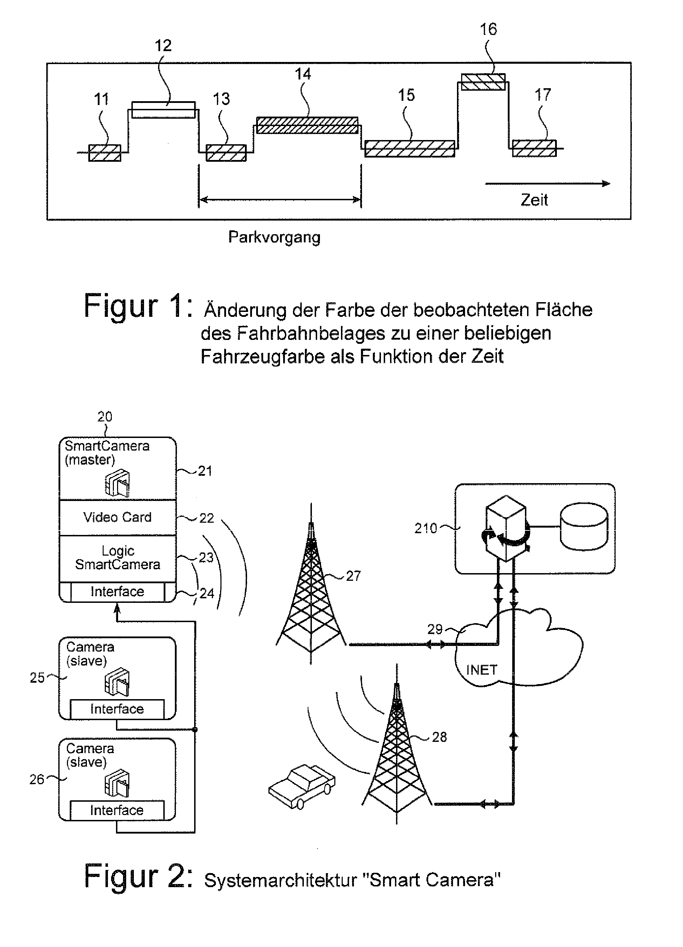

In einer weiteren bevorzugten Ausführungsform wird der Wechsel der Helligkeit und/oder der Farbe der Rohereignisse untersucht. Figur 1 zeigt das Modell eines Parkvorgangs in Bezug auf die Änderung der Farbe der beobachteten Fläche von Boden (Farbe B) zu irgendeiner Autofarbe (Farbe A) als Funktion der Zeit. In gleicher Weise kann die Änderung der Helligkeit bzw. die Helligkeit der beobachteten Farbe ausgewertet werden. In einem ersten Zeitraum 11 ist der Parkplatz zunächst frei und es wird die Farbe des Bodens, mithin des Fahrbahnbelages des Parkplatzes detektiert. Anschließend ist der Parkplatz für den Zeitraum 12 mit einem ersten Fahrzeug belegt und es wird die zu diesem Fahrzeug zugehörige Farbe bestimmt. In dem folgenden Zeitraum 13 ist der Parkplatz frei und es wird die Farbe des Bodens detektiert. Im Zeitraum 14 ist der Parkplatz durch ein zweites Fahrzeug belegt und es wird wiederum die dazugehörige Farbe bestimmt, die sich in diesem Beispiel von der des ersten Fahrzeuges unterscheidet. In dem sich anschließenden Zeitraum 15 ist der Parkplatz frei und es wird wiederum die Farbe des Bodens detektiert. Im folgenden Zeitraum 16 ist der Parkplatz erneut durch ein drittes Fahrzeug belegt und es wird die Farbe des dritten Fahrzeuges detektiert, die sich von der Farbe des ersten und des zweiten Fahrzeuges unterscheiden kann. Im folgenden Zeitraum 17 ist der Parkplatz frei und es wird die Farbe des Bodens detektiert. In der Gesamtheit der betrachteten Zeiträume wird vier mal die Farbe des Bodens detektiert, sowie je einmal die Farbe eines jeden parkenden Fahrzeuges, d.h. die Farbe die am häufigsten auftritt, ist die des Bodens. Durch die Bestimmung des Wechsels der momentanen Bodenreflexion (Farbe des Bodens) kann der freie Fahrbahnbelag detektiert werden.

Die Bestimmung der zunächst nicht bekannten Farbe des Bodens kann bezugnehmend auf Figur 1 wie folgt erfolgen:

Für einen Parkvorgang, mithin Anzahl der Parkvorgänge nP=1 gilt, dass die Bodenfarbe und Autofarbe genau einmal auftreten, d.h. Häufigkeit der Bodenfarbe nB=1 sowie Häufigkeit der Autofarbe nA=1. Für mehrere Parkvorgänge, mithin nP>1 gilt, dass die Anzahl der Parkvorgänge gleich der Häufigkeit der Bodenfarbe gleich der Häufigkeit der Autofarbe ist, mithin nP=nB=nA, wobei sich jedoch die Häufigkeit der Autofarbe aus der Summe der Häufigkeiten der i verschiedener Autofarben ergibt, d.h. es gilt: nA=nA1 +nA2+... +nAi. Tritt nur eine Autofarbe auf, d.h. i=1 und nB=nA ist die Farbe des Bodens nicht entscheidbar. Treten verschiedene Autofarben auf, d.h. i>1, so tritt die Farbe des Bodens häufiger auf als jede einzelne Autofarbe, d.h. nB>nAi. Die am häufigsten auftretende Farbe ist mithin die des Bodens, weswegen der Boden anhand der am häufigsten auftretenden Farbe identifiziert werden kann.

In einer bevorzugten Ausführungsform werden diese Wechsel der Helligkeit und/oder der Farbe von Roh-Ereignissen mittels mindestens eines Schwellwertes in mehrere Gruppen eingeteilt. Die Häufigkeit von Wechseln der Helligkeit und/oder der Farbe in jeder Gruppe wird bestimmt und die Gruppe mit dessen Maximalwert der Häufigkeit wird als Helligkeit und/oder Farbe des Untergrunds in dem Beobachtungsgebiet zugeordnet. Des Weiteren kann auch die Gruppe mit der zweithöchsten Häufigkeit als weitere Helligkeit und/oder Farbe des Untergrunds zugeordnet werden. Vorteil dieses Vorgehens ist, dass mehr als eine Farbe dem Untergrund zugeordnet werden kann, die sich beispielsweise aus unterschiedlichen Lichtverhältnissen innerhalb eines bestimmten Zeitraumes ergeben kann. Dadurch wird das Verfahren robuster.

In einer weiteren bevorzugten Ausführungsform werden die Roh-Ereignisse klassifiziert und diese klassifizierten Roh-Ereignisse zu vorgegebenen zeitlichen und/oder räumlichen Mustern zugeordnet. Hierbei werden spezielle ortsbezogene Helligkeitsverläufe, wie unterschiedliche Asphaltierungen durch Fahrbahnbelagausbesserungen bei der Klassifikation der Rohereignisse erkannt und berücksichtigt. Das gleiche gilt für Helligkeitswechsel aufgrund von Wettereinflüssen sowie von Helligkeitsverläufen im Ablauf des Tages und der Jahreszeiten. Vorteil dieses Ausführungsformen ist eine Erhöhung der Robustheit des Verfahrens, indem eine Fehlklassifikation des Bodens durch Berücksichtung externer Faktoren, die Einfluss auf die momentane Bodenreflexion, jedoch ihren Ursprung außerhalb eines Belegungsvorganges haben, vermieden werden. Beispielsweise können auf diese Weise die momentanen Fahrbahnverhältnisse wie Fahrbahn trocken, nass oder verschneit detektiert werden. Vorzugsweise werden dabei zusätzlich die geometrische Schwerpunktlage der zusammenhängenden Bildbereiche herangezogen. Zusammenhängende Bildbereiche können z.B. zusammenhängende Pixelgruppen sein.

In einer bevorzugten Ausführungsform werden Roh-Ereignisse, die aus Videobildern von mindestens zwei verschiedenen, voneinander entfernt liegenden Kameras bestimmt werden bei der Klassifikation dieser miteinander korreliert. Dadurch lassen sich unterschiedliche Reflexionseigenschaften der Fahrbahn aufgrund der verschiedenen Blickrichtungen der zwei oder mehr Kameras erkennen. Dadurch können außerdem Bodenbereiche, die momentan außerhalb des Sichtbereiches der einen Kamera sind, bspw. weil diese durch größere Fahrzeuge verdeckt werden, möglicherweise durch die andere Kamera erfasst werden, wenn der Sichtbereich für die andere Kamera noch eröffnet ist. Durch Korrelation werden Fehlklassifikationen vermieden und die Zuverlässigkeit des Verfahrens wird insbesondere durch eine geometrische Auswertung korrespondierender Bereiche aus beiden Kameraperspektiven erhöht.

Die Bestimmung des Belegungszustandes einer Fahrbahn kann in Bezug auf einen Parkplatz dazu verwendet werden, dessen aktuellen Zustand zu bestimmen, insbesondere ob bestimmte Parkbereiche wie Parkbuchten frei oder belegt oder bis zu welchem geometrischen Ausmaß belegt sind.

Die Bestimmung des Belegungszustandes einer Fahrbahn kann zudem in Bezug auf Straßen dazu verwendet werden, deren aktuellen Zustand zu bestimmen, insbesondere ob stehende Fahrzeuge den Verkehr blockieren.

In einer bevorzugten Ausführungsform wird die Flächenbelegungsinformation an eine Zentrale oder einen Endnutzer kommuniziert.

Das zugehörige System mit Kameras, Recheneinrichtung, Speichereinrichtung und Einrichtung zum Weitergeben der ermittelten Information kann ebenfalls in Form verschiedener Ausführungsformen ausgebildet sein.

Figur 2 zeigt eine erste Ausführungsform des Systems. Die Kameras sind in Form eines Masters 20 und mehreren Slaves 25, 26 ausgebildet, die miteinander drahtlos oder per Kabel miteinander verbunden sein können. Der Master 20 weist eine Kamera 21, eine Videokarte 22, eine Logic-Smart Camera 23 und eine Schnittstelle 24 auf. In dieser Ausführungsform ist eine Logik, welche die Algorithmen zur Videoanalyse und Parkplatzdetektion implementiert, in der Kamera integriert, und zwar in der Logic-SmartCamera 23. Die Logic-SmartCamera ist über das Interface 24 drahtlos mit einer Basisstation 27 und im Weiteren bidirektional drahtgebunden über das Internet mit einer Platform 210 verbunden. Die Parkplatzinformation wird bspw. über UMTS übermittelt. In der Platform 210 erfolgt die Speicherung der Parkplatzinformation, das Informationsrouting sowie die Wartung bzw. Updates der Kameras. Mit dem Internat ist zudem eine weitere Basisstation 28 bidirektional verbunden. Über diese kann die Parkplatzinformation drahtlos an eine Vielzahl von Parkplatzinteressenten 213 des fließenden oder stehenden Verkehrs übermittelt werden.

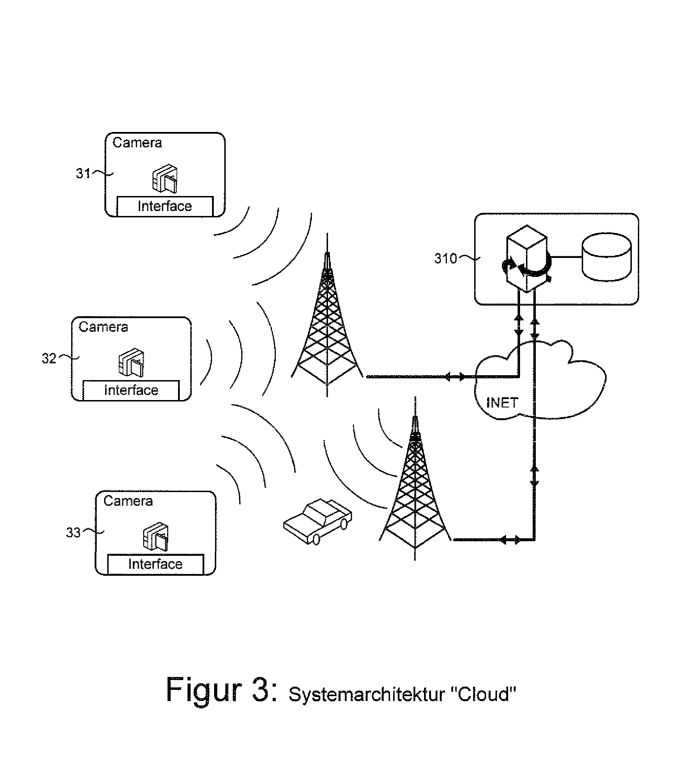

Figur 3 zeigt eine zweite Ausführungsform des Systems Die Kameras 31, 32, 33 sind drahtlos mit einer Basisstation 27 verbunden. Die Logik welche die Algorithmen zur Videoanalyse und Parkplatzdetektion implementiert sind jedoch im Gegensatz zu der ersten Ausführungsform nicht in Form einer Logic Smart Camera implementiert, sondern im Sinne einer Cloud-Lösung in der dezidierten Platform 310 untergebracht. Von den Kameras wird drahtlos ein Rohvideostrom zur Platform übermittelt. Was die weiteren Elemente dieser Ausführungsform angeht, wird Bezug auf Figur 2 genommen.

Die in den Figuren 2 und 3 gezeigte Systemarchitektur (Smart Camera und Cloud) gezeigte Gesamtarchitektur kann in folgende Komponenten zerlegt sein:
1. Bildaufnahme
2. Bild(roh)daten-Übertragung im Fall der Cloud-Lösung
3. Bildauswertung
4. Übermittlung an und Verdichtung, Darstellung der Verkehrs/Park-Lagedaten in einer Zentrale
5. Aufbereitung und Verteilung der Daten für den Endnutzer
6. Weiterverarbeitung der Daten beim Endnutzer

Die Bildaufnahme erfolgt mit Hilfe einer geeigneten Kamera im sichtbaren Bereich oder im Infrarotbereich. Die Kamera verfügt entweder über einen geeigneten Prozessor zur Bilddatenauswertung (Smart Camera) und über eine Modul zur Übertragung der prozessierten Daten oder - im Fall der Cloud-Lösung - zur Übertragung der Bild-Rohdaten an die zentrale Auswerteeinheit.

Die Bildauswertung kann mit den Stufen:
a) Primäre Analyse der Videobilder,
   welche die Erkennung statischer Szenen, die Bestimmung der Roh-Ereignisse und im Ergebnis der primären Analyse die Roh-Ereignisse liefert, umfassen kann; sowie b) Erkennung der Bedeutung der Rohereignisse,
   welche die zeitliche Korrelation, geometrische Regeln, statistische Auswertungen, Gedächtnis und Lernfähigkeit und im Ergebnis der sekundären Analyse freie Parkflächen und stehende Fahrzeuge liefert, umfassen kann.

Für die Übermittlung an und die Verdichtung, Darstellung der Verkehrs/Park-Lagedaten in einer Zentrale sowie die Aufbereitung und Verteilung der Daten für den Endnutzer kann eine geeignete Infrastruktur folgende Komponenten aufweisen:
Eine Datenübertragungseinrichtung zur Übermittlung der Belegungszustände von Fahrbahnen und Parkräumen; eine Plattform (210 Figuren 2 und 3) auf der sämtliche Verwaltungsdaten gesammelt und bereitgestellt werden, wie Geometriedaten, Abrechnungsdaten, Buchungsdaten, technische Zustandsdaten, etc; eine Zentrale von der aus Reaktionen auf etwaige Verkehrstörungen veranlasst werden und im Fall der Parkplatzdetektion die verfügbaren Parkflächen an die Endnutzer übermittelt werden; sowie Broadcastdienste über die die Daten für die Endnutzer an alle Teilnehmer übermittelt werden oder Funkdienste über die die Daten für die Endnutzer gezielt an einzelne Nutzer übermittelt werden.

Die Erfindung birgt eine Reihe von primären Vorteilen, insbesondere die optimierte Ausnutzung vorhandener LKW-Parkplätze, wobei der LKW-Verkehr an den Bundesautobahnen gehalten werden soll durch Schaffung von Transparenz hinsichtlich der Parkplatzverfügbarkeit. Die Parkplatzverfügbarkeit kann rechtzeitig drahtlos an einen LKW übermittelt werden. Auch wird ein LKW-Fahrer durch die Erfindung in die Lage versetzt, sein Parkplatzsuche vorausschauend zu gestalten. Die Verkehrssicherheit wird zusätzlich durch Vermeidung von Falschparkern auf den Zufahrten und Standspuren erhöht.

Bezüglich der Überwachung des fließenden Verkehrs ergeben sich Vorteile aus der Verfügbarkeit aktueller Daten über fließenden Verkehr und neuralgischer Punkte. Dies schafft eine Basis für eine Verkehrslenkung im Sinne einer Bedarfserhebung und ermöglicht Langfristplanungen. Zudem können Unfallursachen besser ermittelt werden. Es ist außerdem möglich, unzulässige Parkvorgänge an kritischen Stellen zu detektieren.

Weitere Vorteile ergeben sich bspw. daraus, dass es sich hierbei um ein kostengünstiges Verfahren und System handelt, da keine Installation von Detektoren unter der Fahrbahndecke erforderlich ist. Zudem sind keine festen Parkboxen nötig. Es kann eine gezielte Parkplatzzuweisung erfolgen. Das System kann mit künftigen Fahrzeug-Applikationen sowie bargeldloser Bezahlung gekoppelt werden. Gestufte Nutzerkonzepte sind möglich. Es ist weder ein großer Aufwand bei der Einführung noch eine Zwangsausrüstung von LKWs nötig.

Die Erfindung wurde anhand von Beispielen und der Figuren näher erläutert, wobei diese Darstellung die Erfindung nicht einschränken soll. Es versteht sich, dass Fachleute Änderungen und Abwandlungen machen können, ohne den Umfang der folgenden Ansprüche zu verlassen. Insbesondere umfasst die Erfindung Ausführungsformen mit jeglicher Kombination von Merkmalen der verschiedenen Ausführungsformen, die hier beschrieben sind.

## Patentansprüche

1. Verfahren zum Erfassen einer statischen Szene in einem Beobachtungsgebiet, insbesondere von Parkplätzen oder Strassen mittels Auswerten von aufeinanderfolgenden Videobildern, die mit mindestens einer Kamera aufgenommen werden, mit den Schritten:
a) Aufnehmen von zwei direkt aufeinanderfolgenden Videobildern(V1, V2) als ein Bildpaar,
b) Ermitteln eines ersten Differenzbildes (D1) des Bildpaars,
c) Bestimmen eines Nutzsignalanteils und eines Rauschanteils in dem ersten Differenzbild (D1) und Feststellen, ob eine signifikante Änderung zwischen den zwei Videobildern (V1, V2) des Bildpaars vorliegt,
d) n-maliges Wiederholen der Schritte a) bis c), wobei n = (25, 26, ..., 125) ist und/oder für einen vorgegebenen Zeitraum von vorzugsweise einer Anzahl m Sekunden, wobei m = (1, 2, ..., 5) Sekunden ist,
e) Feststellen, dass eine statische Szene vorliegt, wenn bei allen analysierten Bildpaaren in miteinander korrespondierenden Bereichen keine signifikante Änderung auftritt, und
f) Speichern eines Bildes, vorzugsweise des zweiten Bildes des zuletzt analysierten Bildpaars als Referenzbild, wenn eine statische Szene festgestellt wird.

2. Verfahren zum Bestimmen von Roh-Ereignissen in einem Beobachtungsgebiet, insbesondere von Parkplätzen oder Strassen mittels Auswerten von aufeinanderfolgenden Videobildern, die mit mindestens einer Kamera aufgenommen werden, mit den Schritten:
a) Erfassen einer statischen Szene und einer nächsten statischen Szene insbesondere mit einem Verfahren nach Anspruch 1, wobei die nächste statische Szene von der einen statischen Szene bereichsweise verschieden ist,
b) Ermitteln eines zweiten Differenzbildes (D2) aus dem Referenzbild der einen statischen Szene und dem neuen Referenzbild der nächsten statischen Szene, wobei vorzugsweise jeweils gleiche statische Bereiche in den Referenzbildern verglichen werden,
c) Ermitteln von nach der Helligkeit und/oder der Farbe zusammenhängenden Bildpunktgruppen in dem zweiten Differenzbild (D2) mittels eines Segmentierungsalgorithmus, und
d) Festlegen von zusammenhängenden Bildpunktgruppen als Roh-Ereignisse.

3. Verfahren nach Anspruch 2, wobei
die Geometrie jeder Bildpunktgruppe als Roh-Ereignis bestimmt wird und wobei besonders bevorzugt jedes Roh-Ereignis mindestens eine der folgenden Informationen aufweist:
a) der Wechsel der Helligkeit und/oder Farbe, vorzugsweise Helligkeit je Farbe einer Bildpunktgruppe, jeweils zur Zeit T und die vorhergehenden Farbwerte der Bildpunktgruppe,
b) die Zeit T und vorzugsweise das Datum der Aufnahme des neuen Referenzbilds,
c) die geometrischen Koordinaten des Gebietes, in dem der Wechsel der Helligkeit und/oder Farbe erfolgte,
d) die Koordinaten des Schwerpunktes der festgelegten zusammenhängenden Bildpunktgruppe, und
e) die Anzahl von Bildpunkte in der Bildpunktgruppe.

4. Verfahren zum Erkennen von freien Flächen in einem Beobachtungsgebiet, insbesondere von Parkplätzen oder Strassen mittels Auswerten von aufeinanderfolgenden Videobildern, die mit mindestens einer Kamera aufgenommen werden, mit den Schritten:
a) Bereitstellen mindestens eines Roh-Ereignisses, das insbesondere mit einem Verfahren nach Anspruch 2 oder 3 bestimmt wird ,
b) Bereitstellen von Informationen zur Geometrie des Beobachtungsgebiets, insbesondere der quasi-statischen Geometrie der Fahrbahn und der Parkbereiche,
c) Analysieren der Roh-Ereignisse unter Berücksichtigung der Geometrie des Beobachtungsgebiets mittels eines regelbasierten Entscheidungsverfahrens, und
d) Erkennen der freien Flächen in dem Beobachtungsgebiet.

5. Verfahren nach Anspruch 4, mit den Schritten:
a) vorzugsweise Zusammenlegen von sich überschneidenden Gebieten für Roh-Ereignisse, die zum gleichen Zeitpunkt T stattfinden,
b) Vergleichen der Größe von Gebieten oder zusammengelegten Gebieten der Roh-Ereignisse mit einer Mindestgröße von Bildbereichen, die Abbildungen von Objekten, vorzugsweise Fahrzeugen entsprechen, und
c) Herausfiltern der Roh-Ereignisse, deren Gebiete oder zusammengelegten Gebiete kleiner sind, vorzugsweise signifikant kleiner sind als die Mindestgröße.

6. Verfahren nach Anspruch 4 oder 5, mit den weiteren Schritten:
a) Einteilen der Wechsel der Helligkeit und/oder der Farbe von Roh-Ereignissen mittels mindestens einem Schwellwert in mehrere Gruppen,
b) Bestimmen der Häufigkeit von Wechseln der Helligkeit und/oder Farbe in jeder Gruppe, und
c) Zuordnen der Helligkeit und/oder Farbe in der Gruppe mit der größten Häufigkeit von Wechseln als Helligkeit und/oder Farbe des Untergrunds in dem Beobachtungsgebiet und vorzugsweise
d) Zuordnen der Helligkeit und/oder Farbe in der Gruppe mit der nächstgrößten Häufigkeit von Wechseln als weitere Helligkeit und/oder Farbe des Untergrunds in dem Beobachtungsgebiet.

7. Verfahren nach Anspruch 6, mit:
Korrelieren der Roh-Ereignisse, die aus Videobildern von mindestens zwei verschiedenen, voneinander entfernt liegenden Kameras bestimmt werden.

8. Verfahren nach Anspruch 7, mit Klassifizieren der Roh-Ereignisse und Zuordnen der klassifizierten Roh-Ereignisse zu vorgegebenen zeitlichen und/oder räumlichen Mustern und Speichern der klassifizierten Rohereignisse in einer Historie der Ereignisse, vorzugsweise mit den folgenden Schritten:
a) Erkennen und Berücksichtigen von speziellen ortsbezogenen Helligkeitsverläufen, wie unterschiedlichen Asphaltierungen durch Fahrbahnbelagausbesserungen bei der Klassifikation der Rohereignisse, und/oder
b) Erkennen und Berücksichtigen von Helligkeitswechseln aufgrund von Wettereinflüssen bei der Klassifikation der Rohereignisse, und/oder
c) Erkennen und Berücksichtigen von Helligkeitsverläufen im Ablauf des Tages und der Jahreszeiten bei der Klassifikation der Rohereignisse, wobei vorzugsweise für die Schritte a), b) und c) zusätzlich die geometrische Schwerpunktlage der zusammenhängenden Bildbereiche herangezogen werden.

9. Verfahren nach einem der Ansprüche 7 oder 8, wobei das Beobachtungsgebiet einen Parkplatz aufweist, mit:
Bestimmen der aktuellen Zustände "frei" oder "belegt" für Parkbereiche sowie die Geometrie der zugehörigen Gebiete anhand der Klassifikation der Roh-Ereignisse.

10. Verfahren nach einem der Ansprüche 7 oder 8, wobei das Beobachtungsgebiet eine Straße aufweist, mit:
Bestimmen der aktuellen Zustände auf Fahrbahnen der Straße, insbesondere ob stehende Fahrzeuge den Verkehr blockieren, anhand der Klassifikation der Roh-Ereignisse.

11. Verfahren nach einem der Ansprüche 1 bis 10, mit
Aufbereiten der Flächenbelegungsinformation und Kommunizieren an eine Zentrale oder einen Endnutzer.

12. System zum Durchführen eines Verfahrens nach einem der Ansprüche 1 bis 11, mit:
a) mindestens einer Kamera, wie eine Video- bzw. Infrarotkamera, zum Aufnehmen von aufeinanderfolgenden Videobildern,
b) einer Recheneinrichtung zum Verarbeiten der Videobilder, und
c) einer Speichereinrichtung zum Speichern von mindestens einer der folgenden Informationen, Geometrie des Beobachtungsgebiets, zeitliche und/oder räumliche Muster, Ergebnisse des Verfahrens, wie Differenzbilder, Roh-Ereignisse, Helligkeit und/oder Farbe des Untergrunds in dem Beobachtungsgebiet, die Historie von klassifizierten Roh-Ereignisse und Belegungsinformationen der Flächen im Beobachtungsgebiet,
d) einer Einrichtung zum Weitergegeben der ermittelten Informationen.

13. System nach Anspruch 12, mit mindestens zwei Kameras, die Videobilder vorzugsweise drahtlos an eine Zentrale senden, wobei die Zentrale die Recheneinrichtung, die Speichereinrichtung und die Informationsweitergabeeinrichtung aufweist.

14. System nach Anspruch 12, mit einer Master-Kamera und mindestens einer Slave-Kamera, wobei die Slave-Kamera die Videobilder vorzugsweise drahtlos an die Master-Kamera sendet, wobei die Master-Kamera die Recheneinrichtung, die Speichereinrichtung und die Informationsweitergabeeinrichtung aufweist.
